# EUROPÄISCHE PATENTANMELDUNG

(11) **EP 1 426 091 A1**
(43) Veröffentlichungstag der Anmeldung: **09.06.2004**
(21) Anmeldenummer: 03027718.0
(22) Anmeldetag: 02.12.2003
(51) Int. Cl.: B01D 46/10

(54) **Feinstfiltereinsatz sowie Filteranordnung zum Abscheiden feinst verteilter Tröpchen aus Aerosolen**

(30) Priorität: 02.12.2002 DE 10256388
(71) Anmelder: Rhodius GmbH, 91781 Weissenburg (DE)
(72) Erfinder: Götz, Norbert, 91785 Pleinfeld (DE)
(74) Vertreter: Weigel, Matthias, Dipl.-Ing.

(57) **Zusammenfassung**

Die Erfindung betrifft einen Feinstfiltereinsatz (10 zum Abscheiden feinst verteilter Tröpfchen aus Aerosolen, insbesondere zum Abscheiden feinster Öl- und/oder Emulsionströpfchen aus Öl- und/oder Emulsionsnebeln. Der Feinstfiltereinsatz (10) hat einen Filterrahmen (12), in dem mehrere Lagen eines Filtergestricks (14) gehalten sind. Das Filtergestrick (14) ist ausschließlich aus Kunststoffasersträngen (20) gestrickt ist, wobei die Maschengröße (x, y) der einzelnen Maschen (20) des Kunststoff-Filtergestricks (14) so bemessen ist, dass durch die mehrlagige Anordnung feinste Tröpfchen mit einer Größe von kleiner oder gleich 1 µm aus dem Aerosol abzuscheiden sind. Des weiteren betrifft die Erfindung eine Filteranordnung, mit der feinst verteilte Tröpfchen mit einer Größe von kleiner oder gleich 1 µm aus einem Aerosol abzuscheiden sind.

## Beschreibung

Die Erfindung betrifft einen Feinstfiltereinsatz nach dem Oberbegriff des Anspruchs 1 zum Abscheiden feinst verteilter Tröpfchen aus Aerosolen, insbesondere zum Abscheiden feinster Öl- und/oder Emulsionströpfchen aus Öl- und/oder Emulsionsnebeln. Ferner betrifft die Erfindung eine Filteranordnung nach dem Oberbegriff des Anspruchs 9, die gleichfalls zum Abscheiden feinst verteilter Tröpfchen aus Aerosolen dient.

Das Abscheiden feinst verteilter Tröpfchen aus Aerosolen ist von besonderer Bedeutung, da flüssige Stoffe ab einer gewissen Tröpfchengröße toxisch wirken können. Hierbei ist insbesondere das Abscheiden von Öl- und Emulsionströpfchen aus Öl- und Emulsionsnebeln hervorzuheben.

So werden bei der spanlosen Umformung metallischer Werkstoffe in Walzanlagen und Pressenstraßen oder bei der spanenden Bearbeitung von Werkstücken als Schmier- und Kühlmittel üblicherweise Emulsionen auf Öl-Wasser-Basis eingesetzt, bei deren Verwendung Öl- und Emulsionsnebel mit in der Luft feinst verteilten Öl- und Emulsionströpfchen während der Bearbeitungsvorgänge entstehen. Die Tröpfchengröße der entstehenden Öl- und Emulsionsnebel bewegen sich in einem Bereich von etwa 0,3 bis 3 µm. Um diese Öl- und Emulsionsnebel aus der Abluft zu filtern, sind aus dem Stand der Technik verschiedene Filtereinsätze bekannt, die in entsprechenden Filteraufnahmen gehalten sind, durch welche die zu filternde Abluft hindurchgeleitet wird.

So sind als erste Maßnahme unmittelbar an der jeweiligen Bearbeitungsstation, wie einer Presse oder einer Werkzeugmaschine, Prallbleche vorgesehen, gegen die der Öl- und Emulsionsnebel aufsteigt und an denen zumindest ein Teil der Öl- und Emulsionströpfchen kondensiert.

Des weiteren werden elektrostatische Filter eingesetzt, die elektrostatisch geladen werden, um die Öl- und Emulsionströpfchen elektrostatisch aus der Abluft anzuziehen.

Ferner werden sogenannte Speicherfilter eingesetzt, die aus einem Vlies aus Kunststoffasern gebildet sind, durch das das Aerosol geleitet wird. Sobald der Speicherfilter mit Öl- und Emulsionströpfchen gesättigt ist und seine Filterwirkung nicht mehr ausreicht, muß der Speicherfilter jedoch ausgetauscht und aufwendig entsorgt werden, da eine Reinigung des Speicherfilters aufgrund seiner Vliesstruktur nicht möglich ist.

Schließlich werden sogenannte Kombinationsfilter verwendet, bei denen als Filtereinsatz mehrere Lagen eines Filtergestricks aus Draht und einem parallel verstrickten Kunststoffaserstrang verwendet wird. So hat sich gezeigt, dass Wasser eine besonders hohe Affinität zu Metallmaterialien besitzt, während Kohlenwasserstoff-Verbindungen, wie Öle, eine besonders hohe Affinität zu Kunststoffmaterialien zeigen. Durch die gleichzeitige kombinierte Verwendung dieser beiden Werkstoffe Metall und Kunststoff in dem Filtergestrick wird die Filterleistung des Kombinationsfilters gegenüber herkömmlichen Filtern gesteigert.

Aus der DE 198 05 444 A1 ist ein Tropfenabscheider zur Abtrennung von in Tropfenform und/oder Aerosolform vorliegenden Flüssigkeiten bekannt, der gleichzeitig zur partiellen Oxidation der in flüssiger und/oder gasförmiger Phase enthaltenen oxidierbaren organischen und/oder anorganischen Verbindungen aus Abgas- und/oder Abluftströmen dient. Hierzu wird der Abgas- bzw. der Abluftstrom durch mindestens einen katalytisch wirksamen Einbau geleitet, der gleichzeitig aufgrund seiner geometrischen Bauart die Flüssigkeiten zugleich abscheiden und/oder abtrennen kann. Als Einbau wird ein Gestrick aus einer Kobaltbasislegierung mit einem Drahtdurchmesser von 0,07 mm eingesetzt. Die Dichte der Gestrickpackung liegt in einem Bereich von 0,5 kg/l bis 10 kg/l.

Nachteilig an den zuvor beschriebenen Filtereinsätzen ist jedoch, dass die Filterleistung dieser bekannten Filtereinsätze bisher nicht ausreicht, feinst verteilte Tröpfchen aus Aerosolen zu filtern, deren Tröpfchengröße kleiner oder gleich 1 µm sind.

Es ist Aufgabe der Erfindung, einen Feinstfiltereinsatz bzw. eine Filteranordnung zum Abscheiden feinst verteilter Tröpfchen aus Aerosolen, insbesondere zum Abscheiden feinst verteilter Öl- und Emulsionströpfchen aus Öl- und/oder Emulsionsnebeln anzugeben, der bzw. die einfach aufgebaut ist, einfach zu reinigen ist und auch bei kleinsten Tröpfchengrößen eine ausreichende Filterleistung zeigt.

Die Erfindung löst diese Aufgabe durch einen Feinstfiltereinsatz mit den Merkmalen nach Anspruch 1 zum Abscheiden feinst verteilter Tröpfchen aus Aerosolen. Ferner löst die Erfindung die Aufgabe durch eine Filteranordnung mit den Merkmalen nach Anspruch 9.

Der erfindungsgemäße Feinstfiltereinsatz basiert unter anderem auf der überraschenden Erkenntnis, dass entgegen der bisher üblichen Vorgehensweise, durch Kombination der beiden Werkstoffe Metall und Kunststoff bei gestrickten Filtereinsätzen die unterschiedlichen Affinitäten von Wasser zu Metall und Kohlenwasserstoff-Verbindungen zu Kunststoff auszunützen, um die Filterwirkung beim Abscheiden von Tröpfchen aus Aerosolen zu erhöhen, durch die gezielte Verwendung von Kunststoffasersträngen als Material für den gestrickten Filtereinsatz ein Abscheiden kleinster Tröpfchen mit weniger als 1 µm möglich ist, wenn das Filtergestrick in mehreren Lagen angeordnet ist. In diesem Zusammenhang ist unter einer mehrlagigen Anordnung sowohl zu verstehen, dass mehrere Einzellagen des gleichen Filtergestricks aneinander anliegend angeordnet sind, als auch, dass eine Einzellage eines Filtergestricks mehrlagig gefaltet ist.

So wird durch die faserige Struktur der verwendeten Kunststoffaserstränge einerseits, und durch die eine Überdeckung der Maschenöffnungen und der Kunststoffaserstränge bewirkende Anordnung des Fasergestricks in mehreren Lagen andererseits eine in sich geschlossene Filterstruktur erzeugt, welche nicht nur ein Abscheiden der Tröpfchen durch die Trägheit der Tröpfchen und die Sperrwirkung des Filtermaterials, sondern insbesondere ein Abscheiden besonders kleiner Tröpfchen durch Diffusion bewirkt. So hat sich gezeigt, dass Tröpfchen mit einer Tröpfchengröße von weniger als 1 µm eine Brownsche Molekularbewegung zeigen, die mit geringer werdender Tröpfchengröße zunimmt. Mit zunehmender Brownscher Molekularbewegung der Tröpfchen nimmt wiederum die Wahrscheinlichkeit zu, dass Tröpfchen an Filterfasern eines Filters haften bleiben. Durch die faserige Struktur der Kunststoffaserstränge des Filtergestricks einerseits und die Überdeckung der Maschenöffnungen und der Kunststoffaserstränge andererseits bietet der erfindungsgemäße Feinstfiltereinsatz eine verglichen mit bekannten Filtern deutlich feinere Filterstruktur, so dass durch diese feinere Filterstruktur die Wahrscheinlichkeit zunimmt, dass derart feine Tröpfchen, mit einer Tröpfchengröße von weniger als 1 µm, an einzelnen Fasern des Filtergestricks hängen bleiben. Gleichzeitig bewirkt diese faserige Struktur jedoch auch, dass trotz der hohen Filterwirkung gegenüber kleinsten Tröpfchen ein verglichen mit bekannten Filtern vergleichbar hoher Volumenstrom des Aerosols gefiltert werden kann. Tröpfchen, die eine Tröpfchengröße größer als 1 µm aufweisen, bleiben entweder aufgrund ihrer Trägheit an den Fasersträngen haften, da sie den von der Filterstruktur verursachten Richtungsänderungen des die Tröpfchen transportierenden Gases nicht folgen können, oder sie sind so groß, dass sie aufgrund ihrer Tröpfchengröße unmittelbar in der Filterstruktur hängen bleiben. Ein weiterer Vorteil des erfindungsgemäßen Feinstfiltereinsatzes besteht darin, dass der Feinstfiltereinsatz aufgrund seiner gestrickten Struktur bei entsprechendem Verschmutzungsgrad problemlos gereinigt und erneut verwendet werden.

Weitere vorteilhafte Weiterbildungen der Erfindung ergeben sich aus der nachfolgenden Beschreibung, den Unteransprüchen sowie der Zeichnung.

So hat sich gezeigt, dass eine ausreichende Filterwirkung für Tröpfchengrößen in einem Bereich von kleiner oder gleich 1 µm erzielt werden kann, wenn die Maschengröße beim Stricken des Filtergestricks, das für den erfindungsgemäßen Feinstfiltereinsatz verwendet wird, auf eine Maschenbreite in einem Bereich von etwa 2,0 bis 3,0 mm und auf eine Maschenlänge in einem Bereich von etwa 2,0 bis 3,0 mm vorgegeben worden ist. Mit diesem Filtergestrick können in einer mehrlagigen Anordnung Tröpfchen mit einer Größe von bis zu 0,2 µm abgeschieden werden können.

Das Metergewicht des Filtergestricks liegt vorzugsweise in einem Bereich von etwa 280 bis 320 g/m², damit der gesamte Feinstfiltereinsatz ein möglichst geringes Gesamtgewicht aufweist.

Die Anzahl der Lagen des Filtergestricks wird in Abhängigkeit von dem vorrangig abzuscheidenden Tröpfchentyp gewählt. So wird bei einer besonders bevorzugten Ausführungsform des erfindungsgemäßen Feinstfiltereinsatzes, der insbesondere zum Abscheiden feinster Öltröpfchen aus Aerosolen eingesetzt werden soll, vorgeschlagen, zwischen 13 und 18 Lagen des Filtergestricks mit den Flachseiten aneinander liegend im Filterrahmen anzuordnen. Soll der Feinstfiltereinsatz insbesondere zum Abscheiden feinster Emulsionströpfchen aus Aerosolen eingesetzt werden, wird eine Ausführungsform vorgeschlagen, bei der 8 bis 12 Lagen des Filtergestricks mit den Flachseiten aneinander liegend im Filterrahmen gehalten sind.

Als Ausgangsmaterial für das Filtergestrick wird vorzugsweise ein aus einzelnen Kunststofffasern gefertigter Kunststoffaserstrang eingesetzt, der über ein gutes chemisches Widerstandsvermögen gegenüber den auszufilternden Substanzen wie Kohlenwasserstoff-Verbindungen besitzt. So wird vorgeschlagen, das Filtergestrick insbesondere aus Polypropylenfasersträngen und/oder aus Polyesterfasersträngen zu fertigen, die über eine ausreichende Chemikalienbeständigkeit verfügen und aufgrund ihrer mechanischen Eigenschaften, wie ihrer Reißfestigkeit, gleichzeitig gut zu verarbeiteten sind.

Damit auch zwischen den einzelnen miteinander verschlungenen Maschen des Filtergestricks Strömungskanäle ausgebildet werden, durch die das zu filternde Aerosol strömen und in denen sich auch kleinste Tröpfchen verfangen können, wird bei einer besonders bevorzugten Ausführungsform des erfindungsgemäßen Feinstfiltereinsatzes vorgeschlagen, ein Filtergestrick zu verwenden, das aus Kunststoffasersträngen gestrickt ist, die sich in ihren jeweiligen Gesamttitern voneinander unterscheiden. Durch die unterschiedlich starken Faserstränge wird erreicht, dass die Maschinengrößen des Filtergestricks variieren und die zuvor angesprochenen Strömungskanäle ausbilden.

Damit der Feinstfiltereinsatz eine ausreichende Formstabilität besitzt, wird ferner vorgeschlagen, die Lagen des Filtergestricks zwischen zwei flächigen Halteeinrichtungen in einer flächigen Form im Filterrahmen zu halten. Die Halteeinrichtungen definieren dabei die Ein- und Austrittsbereiche des Feinstfiltereinsatzes, wobei die Halteeinrichtungen so gestaltet sind, dass sie die Strömung des Aerosols durch den Feinstfiltereinsatz so wenig wie möglich beeinträchtigen. Als besonders vorteilhaft hat sich dabei die Verwendung eines im Filterrahmen aufgespannten, grobmaschigen Drahtgeflechtes als Halteeinrichtung gezeigt, das sich einerseits über eine ausreichende Formsteifigkeit und damit verbundene Stützwirkung auszeichnet, während es andererseits die Strömung des Aerosols kaum beeinträchtigt. Um eine Korrosion des Drahtgeflechtes insbesondere beim Reinigen des Feinstfiltereinsatzes zu vermeiden, ist das Drahtgeflecht bevorzugt aus rostfreiem Stahl gefertigt.

Gemäß einem weiteren Aspekt betrifft die Erfindung eine Filteranordnung zum Abscheiden feinst verteilter Tröpfchen aus Aerosolen, insbesondere zum Abscheiden feinster Öl- und Emulsionströpfchen aus Öl- und/oder Emulsionsnebeln, die beispielsweise in dem Strömungskanal einer Absaugeinrichtung angeordnet ist, mit welcher das zu filternde Aerosol, beispielsweise Abluft aus einer Fabrikhalle, abgesaugt wird. Die Filteranordnung hat eine Filteraufnahme, durch die das zu filternde Aerosol in einer vorgegebenen Strömungsrichtung hindurchzuleiten ist. In der Filteraufnahme ist mindestens ein Feinstfiltereinsatz gehalten, der zum Filtern des durch die Filteraufnahme hindurchströmenden Aerosols dient. Der Feinstfiltereinsatz ist dabei erfindungsgemäß so ausgebildet, dass als Filter mehrere Lagen eines aus Kunststoffasersträngen gestrickten Filtergestricks dient, dessen Maschengröße so bemessen ist, dass durch die mehrlagige Anordnung feinst verteilte Tröpfchen mit einer Größe von kleiner oder gleich 1 µm aus dem Aerosol abzuscheiden sind.

Um die vom zu filternden Aerosol anzuströmende Fläche und damit die Filterfläche zu vergrößern, wird bei einer besonders bevorzugten Ausführungsform der erfindungsgemäßen Filteranordnung vorgeschlagen, den Feinstfiltereinsatz bezogen auf die Strömungsrichtung des zu filternden Aerosols unter einem vorgegebenen Anstellwinkel in der Filteraufnahme zu positionieren.

Bei dieser Ausführungsform wird ferner vorgeschlagen, mindestens einen weiteren Feinstfiltereinsatz in der Filteraufnahme anzuordnen, der winkelsymmetrisch bezüglich des zu diesem benachbarten Feinstfiltereinsatzes derart angeordnet ist, dass die beiden Feinstfiltereinsätze in V-Form zueinander angeordnet sind und jeweils den gleichen relativen Anstellwinkel bezogen auf die Strömungsrichtung des zu filternden Aerosols einnehmen. Durch die V-förmige Anordnung der Feinstfiltereinsätze wird die tatsächlich wirksame Filterfläche erhöht, während gleichzeitig der Strömungsverlauf des durch die Filteranordnung strömenden Aerosols gezielt so um gelenkt wird, dass eine möglichst gleichmäßige Durchströmung der Feinstfiltereinsätze erreicht wird. Dabei ist es von besonderem Vorteil, wenn die Spitze der V-förmigen Anordnung der beiden Feinstfiltereinsätze in Strömungsrichtung des zu filternden Aersols zeigt.

Um die Filterleistung der Filteranordnung weiter zu erhöhen, ist es ferner von Vorteil, wenn mindestens ein weiteres Paar V-förmig zueinander angeordneter Feinstfiltereinsätze in der Filteraufnahme gehalten ist. Die so ausgeführte Weiterbildung der erfindungsgemäßen Filteranordnung hat verglichen mit herkömmlichen Filteranordnungen, die das gleiche Bauvolumen einnehmen, eine durch die V-förmige Anordnung der einzelnen Feinstfiltereinsätze deutlich vergrößerte Filterfläche und folglich eine entsprechend höhere Filterleistung. Hierdurch ist die erfindungsgemäße Filteranordnung verglichen mit herkömmlichen Filteranordnungen bei gleichem Durchsatz vom erforderlichen Bauvolumen her kompakter ausgebildet, so dass das insgesamt für eine Filteranlage erforderliche Bauvolumen bei Verwendung der erfindungsgemäßen Filteranordnungen verglichen mit einer Filteranlage, die mit herkömmlichen Filteranordnungen ausgestattet ist, reduziert ist, wodurch auch die entsprechenden Anlagekosten der mit erfindungsgemäßen Filteranordnungen versehenen gesamten Filteranlage verglichen mit herkömmlichen Filteranlagen geringer sind.

Um das Reinigen verschmutzter oder das Austauschen beschädigter Feinstfiltereinsätze zu erleichtern, ist der Feinstfiltereinsatz bzw. sind die Feinstfiltereinsätze lösbar in der Filteraufnahme gehalten, wodurch auf einfache Weise der betreffende Feinstfiltereinsatz sehr schnell und ohne großen Aufwand aus- und eingebaut werden kann.

Bei einer besonders bevorzugten Ausführungsform der erfindungsgemäßen Filteranordnung sind hierzu für jeden Feinstfiltereinsatz zwei Führungsschienen an den einander gegenüber angeordneten Wänden der Filteraufnahme vorgesehen sind, in welche der jeweilige Filtereinsatz mit seinem Filterrahmen zum lösbaren Befestigen eingeschoben werden kann. Die Führungsschienen können dabei zusätzlich justierbar sein, um die Feinstfiltereinsätze in ihren Anstellwinkeln gegebenenfalls nachzustellen.

Als Feinstfiltereinsatz wird bei der erfindungsgemäßen Filteranordnung vorzugsweise eine der zuvor beschriebenen Ausführungsformen des erfindungsgemäßen Feinstfiltereinsatzes verwendet, wie sie in den Ansprüchen 1 bis 8 definiert sind.

Des weiteren wird vorgeschlagen, dass zum Vorreinigen des zu filternden Aerosols in der Filteraufnahme zusätzlich mindestens ein Grobfiltereinsatz zum Filtern gröberer Verunreinigungen aus dem zu filternden Aerosol vorgesehen ist, der in Strömungsrichtung des Aerosols gesehen den Feinstfiltereinsätzen vorgeordnet ist.

Bei einer besonders bevorzugten Ausführungsform ist die gesamte Filteraufnahme in dem Strömungskanal, durch den das zu filternde Aerosol strömt, lösbar befestigt. Dies hat den Vorteil, dass bei einer Reinigung oder Wartung der Filteranordnung durch einfaches Ausbauen der gesamten Filteraufnahme aus dem Strömungskanal sämtliche Feinstfiltereinsätze gemeinsam aus dem Strömungskanal entfernt und in diesen wieder eingesetzt werden können. Hierdurch ist sowohl der Ausbau als auch der Einbau sowie eine Demontage und Montage der Feinstfiltereinsätze deutlich vereinfacht.

Die Erfindung wird nachfolgend anhand eines Ausführungsbeispiels unter Bezugnahme auf die Zeichnung näher erläutert. Darin zeigt:
- Fig. 1: eine Vorderansicht eines erfindungsgemäßen Feinstfiltereinsatzes,
- Fig. 2: eine Schnittansicht durch den Feinstfiltereinsatz nach Fig. 1 entlang des Schnittes A-A in Fig.1,
- Fig. 3: eine Draufsicht auf einen Abschnitt des im Feinstfiltereinsatz nach Fig. 1 verwendeten Filtergestricks in vergrößerter Darstellung, und
- Fig. 4: eine teilweise geschnittene Draufsicht auf eine erfindungsgemäße Filteranordnung, in der mehrere Feinstfiltereinsätze, wie sie in den Fig. 1 bis 3 dargestellt sind, eingesetzt sind.

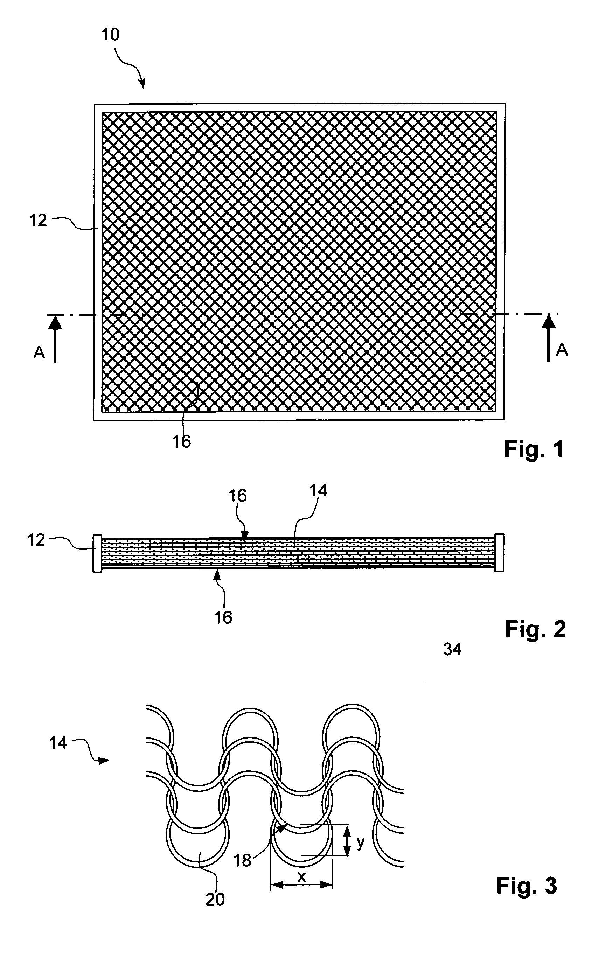

Fig. 1 zeigt in Vorderansicht einen erfindungsgemäßen Feinstfiltereinsatz 10, während in Fig. 2 eine Schnittansicht durch den Feinstfiltereinsatz 10 entlang des Schnittes A-A in Fig. 1 dargestellt ist.

Wie die Fig. 1 und 2 zeigen, hat der Feinstfiltereinsatz 10 einen umlaufenden, geschlossenen Filterrahmen 12. In den Filterrahmen 12 sind insgesamt 16 Einzellagen eines Filtergestricks 14 eingesetzt. Jedes Filtergestrick 14 hat eine flächenmäßige Abmessung, welche zumindest annähernd der Abmessung der durch den Filterrahmen 12 umschlossenen Strömungsöffnung des Feinstfiltereinsatzes 10 entspricht. Die Einzellagen jedes Filtergestricks 14 liegen mit ihren Flachseiten aufeinander und bilden ein Filterpaket.

Die aneinander anliegenden Filtergestricke 14 sind zwischen zwei aus rostfreien Stahldrähten gefertigten Drahtgeflechten 16 gehalten, welche in dem Filterrahmen 12 gespannt sind und die Eintritts- bzw. Austrittsöffnung des Feinstfiltereinsatzes 10 definieren. Die Drahtgeflechte 16 haben eine Formsteifigkeit, die so gewählt ist, dass sie die Filtergestricke 14 in einer zumindest annähernd flächigen Form halten, während die Maschengrößen der Drahtgeflechte 16 so bemessen sind, dass sie den Strömungsverlauf des durch den Feinstfiltereinsatz 10 hindurchströmenden Aerosols kaum behindern.

In Fig. 3 ist in vergrößerter Darstellung ein Ausschnitt aus dem Filtergestrick 14 in Draufsicht dargestellt. Das Filtergestrick 14 ist in Form von Maschen 18 aus einer Vielzahl Kunststoffasersträngen 20 gestrickt. Als Kunststoffaserstränge 20 werden im vorliegenden Ausführungsbeispiel Faserstränge aus Polypropylen eingesetzt, die einen einheitlichen Titer besitzen. Die einzelnen Kunststoffaserstränge 20 können jedoch auch unterschiedliche Titer besitzen, wodurch ein in sich homogenes Gestrick jedoch mit variierenden Maschengrößen entsteht, was wiederum die Bildung kleinere Strömungskanäle zwischen den einzelnen Maschen 18 zur Folge hat. Ferner sind die Kunststoffaserstränge 20 im dargestellten Ausführungsbeispiel schlaufenartig ineinander geführt. Es ist jedoch sofort erkennbar, dass auch andere Gestrickformen für die vorliegende Erfindung eingesetzt werden können.

Die Maschengröße des Filtergestricks 14 wird beim Stricken des Filtergestricks 14 so eingestellt, dass die durchschnittliche Maschenbreite x der Masche 18 in einem Bereich von etwa 2,0 bis 3,0 mm, vorzugsweise bei etwa 2,4 mm liegt. Die durchschnittliche Maschenhöhe y der Masche 18 ist so eingestellt, dass sie gleichfalls in einem Bereich von etwa 2,0 bis 3,0 mm, vorzugsweise bei etwa 2,4 mm liegt. Trotz dieses verhältnismäßig grobmaschigen Filtergestricks 14 wird insbesondere durch die mehrlagige Anordnung der Filtergestricke 14 einerseits eine hohe Filterleistung erreicht, während andererseits eine ausreichende Durchströmung des zu filternden Aerosols beibehalten wird. Gleichzeitig führt die faserige Struktur der Kunststoffaserstränge 20 zu einer Erhöhung der Filterleistung. Ferner hat sich bei der Fertigung von Prototypen gezeigt, dass die in der zuvor beschriebenen Weise gestrickten Filtergestricke 14 aufgrund der Elastizität der verwendeten Kunststoffaserstränge 20 dazu neigen, sich zusammen zu ziehen, so dass die tatsächlichen Maschengrößen geringer sind.

In Testreihen konnten mit dem erfindungsgemäßen Feinstfiltereinsatz 10 Tröpfchen mit einer Größe in einem Bereich von bis zu 0,3 µm aus einem Aerosol abgeschieden werden.

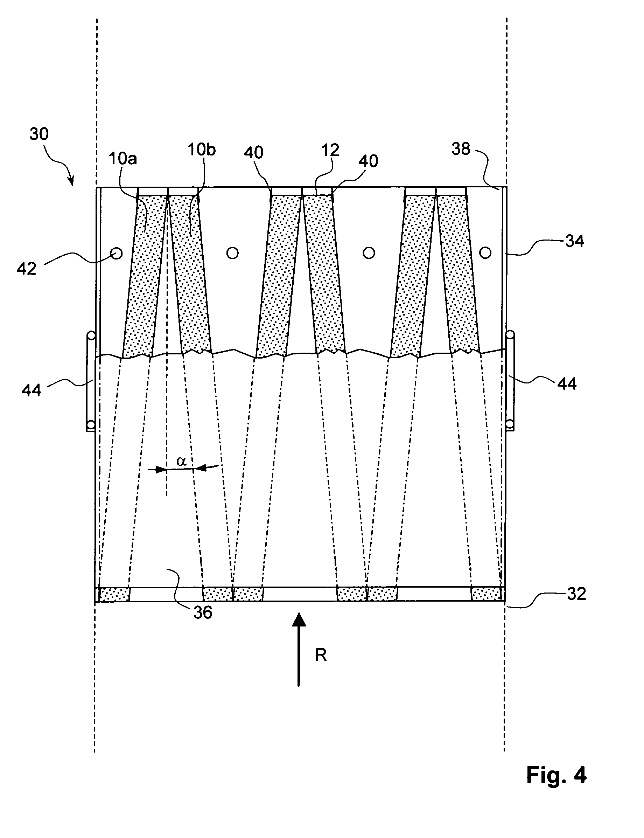

Der in den Fig. 1 und 2 gezeigte Feinstfiltereinsatz 10 wird in einer Filteranordnung 30 eingesetzt, die nachfolgend unter Bezugnahme auf die Fig. 4 näher erläutert wird, in der die Filteranordnung 30 in einer teilweise geschnittenen Draufsicht dargestellt ist. Die Filteranordnung 30 ist in einen Strömungskanal 32 (gestrichelt dargestellt) für das zu filternde Aerosol eingesetzt, durch den das Aerosol in einer vorgegebenen Strömungsrichtung R gefördert wird.

Wie Fig. 4 zeigt, hat die Filteranordnung 30 eine Filteraufnahme 34, in der insgesamt sechs Feinstfiltereinsätze 10 der zuvor beschrieben Art aufgenommen sind, wie später noch im Detail beschrieben wird. Die Filteraufnahme 34 hat eine Eintrittsöffnung 36 für das zu filternde Aerosol oder Rohgas, die in Fig. 4 unten dargestellt ist, sowie eine der Eintrittsöffnung 36 gegenüberliegende Austrittsöffnung 38 für das gefilterte Reingas. Die Eintrittsöffnung 36 und die Austrittsöffnung 38 stehen mit dem Strömungskanal 32 in Strömungsverbindung und sind nach außen hin abgedichtet.

An der Ober- und der Unterseite der Filteraufnahme 34 sind jeweils mehrere Führungsschienen 40 lösbar befestigt, die in ihren Positionen relativ zur Filteraufnahme 34 justiert werden können. Dabei ist jeder Führungsschiene 40 an der Unterseite eine parallel, in gleicher Richtung verlaufende Führungsschiene 40 an der Oberseite der Filteraufnahme 34 zugeordnet. Die jeweils einander zugeordneten Führungsschienen 40 verlaufen in dem in Fig. 4 dargestellten Ausführungsbeispiel bezogen auf die Längsrichtung der Filteraufnahme 34, die der Strömungsrichtung R des Aerosols durch die Filteranordnung 30 entspricht, unter einem vorgegebenen Anstellwinkel α. Der Anstellwinkel α liegt im dargestellten Ausführungsbeispiel bei etwa 5,5°.

Wie Fig. 4 weiter zeigt, dienen die Führungsschienen 40 zum lösbaren Befestigen der zuvor unter Bezugnahme auf die Fig. 1 bis 3 im Detail erläuterten Feinstfiltereinsätze 10. Hierzu wird jeder Feinstfiltereinsatz 10 von der Eintrittsöffnung 36 her in jeweils ein Paar Führungsschienen 40 so eingeführt, dass der Feinstfiltereinsatz 10 einerseits rechtwinklig zur Oberund Unterseite der Filteraufnahme 34 verläuft, während er gleichzeitig entsprechend dem Verlauf der Führungsschienen 40 unter dem Anstellwinkel α geneigt zur Längsrichtung der Filteraufnahme 34 und damit unter dem Anstellwinkel α geneigt zur Strömungsrichtung R des in die Eintrittsöffnung 36 einströmenden Aerosols verläuft.

Dabei sind jeweils zwei der Feinstfiltereinsätze 10a und 10b durch den Verlauf der diesen zugeordneten beiden Paare Führungsschienen 40 so zueinander ausgerichtet, dass sie mit ihren in Richtung der Eintrittsöffnung 36 zeigenden Stirnseiten voneinander beabstandet sind, während sie mit ihren in Richtung der Austrittsöffnung 38 zeigenden Stirnseiten unmittelbar benachbart zueinander angeordnet sind. Hierdurch ergibt sich eine V-förmige Anordnung der beiden Feinstfiltereinsätze 10a und 10b, wobei das offene Ende der V-förmigen Anordnung in Richtung der Eintrittsöffnung 36 der Filteraufnahme 34 zeigt. Durch diese V-förmige Anordnung von jeweils zwei Feinstfiltereinsätzen 10a und 10b wird einerseits eine Vergrößerung der anzuströmenden Fläche und damit der vom zu filternden Aerosol zu durchströmenden Filterfläche erreicht, während gleichzeitig der Aerosolstrom geringfügig in Richtung der Filterflächen umgelenkt wird.

Wird nun der Aerosolstrom in Strömungsrichtung R durch die Filteranordnung 30 gefördert, nehmen die Feinstfiltereinsätze 10 die im Aerosolstrom enthaltenen Tröpfchen, beispielsweise Öl- und Emulsionströpfchen, auf, welche sich in den einzelnen Maschen 18 der aneinander anliegenden Filtergestricke 14 verfangen oder sich aufgrund der hohen Affinität der beispielsweise in den Öl- und Emulsionströpfchen enthaltenen Kohlenwasserstoff-Verbindungen an den Kunststoffasersträngen 20 sammeln. Die sich in den Filtergestricken 14 sammelnden Tröpfchen laufen anschließend durch die Wirkung der Schwerkraft nach unten ab, sammeln sich im Filtergestrick 14 und tropfen schließlich nach unten in die Filteraufnahme 34 ab, wobei im Filtergestrick 14 ausgefilterte feste Teilchen mit abgeführt werden. Die sich in der Filteraufnahme 34 sammelnden, gefilterten Flüssigkeiten und Teilchen laufen dann durch an der Unterseite der Filteraufnahme 34 vorgesehene Ablauföffnung 42 ab.

Sind die Feinstfiltereinsätze 10 durch den Filtervorgang so verschmutzt, dass sie gereinigt werden müssen, kann nach dem Abschalten der Fördereinrichtung, die das Aerosol durch die Filteranordnung 30 fördert, die gesamte Filteraufnahme 34 aus dem Strömungskanal 32 entnommen werden. Zu diesem Zweck sind an den beiden Seitenwänden der Filteraufnahme 34 entsprechende Handgriffe 44 vorgesehen.

Nach der Entnahme der Filteraufnahme 34 aus dem Strömungskanal 32 werden die einzelnen Feinstfiltereinsätze 10 aus den Führungsschienen 40 herausgezogen und gereinigt. Nach dem Reinigen der Feinstfiltereinsätze 10 werden diese wieder in die Filteraufnahme 34 in der zuvor beschriebenen Weise eingesetzt oder, sofern erforderlich, durch neue Feinstfiltereinsätze 10 ersetzt. Anschließend wird die so vorbereitete Filteraufnahme 34 wieder in den Strömungskanal 32 eingesetzt und das Filtern des Aerosols fortgesetzt.

Besonders bevorzugt wird die zuvor beschriebene Filteranordnung 30 zum Reinigen von Abluft eingesetzt, in der feinst verteilte Öl- und Emulsionströpfchen enthalten sind.

Das zuvor beschriebene Ausführungsbeispiel stellt nur eine von vielen Möglichkeiten dar, den erfindungsgemäßen Feinstfiltereinsatz 10 zu verwenden. So kann der Feinstfiltereinsatz 10 beispielsweise auch unmittelbar in einen entsprechend ausgebildeten Abzug eingesetzt werden. Bei der Filteranordnung 30 können zusätzlich zu den Feinstfiltereinsätzen 10 Grobfiltereinsätze vorgesehen werden, die in Strömungsrichtung R des Aerosols gesehen den Feinstfiltereinsätzen 10 vorgeordnet sind, um gröbere Verunreinigungen, wie beispielsweise Schleifstaub und ähnliches, aus dem zu filternden Aerosol zu entfernen, bevor das Aerosol in die Anordnung aus Feinstfiltereinsätzen 10 gelangt.

## Patentansprüche

1. Feinstfiltereinsatz zum Abscheiden feinst verteilter Tröpfchen aus Aerosolen, insbesondere zum Abscheiden feinster Öl- und/oder Emulsionströpfchen aus Öl- und/oder Emulsionsnebeln, mit einem Filterrahmen (12) und mehreren im Filterrahmen (12) gehaltenen Lagen eines Filtergestricks (14),
**dadurch gekennzeichnet,**
**dass** das Filtergestrick (14) ausschließlich aus Kunststoffasersträngen (20) gestrickt ist, und dass die Maschengröße der einzelnen Maschen (20) des Filtergestricks (14) so bemessen ist, dass durch die mehrlagige Anordnung feinst verteilte Tröpfchen mit einer Größe von kleiner oder gleich 1 µm aus dem Aerosol abzuscheiden sind.

2. Feinstfiltereinsatz nach Anspruch 1, **dadurch gekennzeichnet, dass** die Maschengröße beim Stricken des Filtergestricks (14) auf eine Maschenbreite (x) in einem Bereich von etwa 2,0 bis 3,0 mm und auf eine Maschenlänge (y) in einem Bereich von etwa 2,0 bis 3,0 mm vorgegeben worden ist.

3. Feinstfiltereinsatz nach Anspruch 1 oder 2, **dadurch gekennzeichnet, dass** das Metergewicht des Filtergestricks (14) in einem Bereich von etwa 280 bis 320 g/m² liegt.

4. Feinstfiltereinsatz nach Anspruch 1, 2 oder 3, **dadurch gekennzeichnet, dass** zum Abscheiden feinster Öltröpfchen 13 bis 18 Lagen des Filtergestricks (14) mit den Flachseiten aneinander liegend im Filterrahmen (12) gehalten sind.

5. Feinstfiltereinsatz nach Anspruch 1, 2 oder 3, **dadurch gekennzeichnet, dass** zum Abscheiden feinster Emulsionströpfchen 8 bis 12 Lagen des Filtergestricks (14) mit den Flachseiten aneinander liegend im Filterrahmen (12) gehalten sind.

6. Feinstfiltereinsatz nach einem der vorhergehenden Ansprüche, **dadurch gekennzeichnet, dass** das Filtergestrick (14) aus Polypropylenfasersträngen und/oder aus Polyesterfasersträngen gestrickt ist.

7. Feinstfiltereinsatz nach einem der vorhergehenden Ansprüche, **dadurch gekennzeichnet, dass** das Filtergestrick (12) aus Kunststoffasersträngen mit unterschiedlichen Gesamttitern gestrickt ist.

8. Feinstfiltereinsatz nach einem der vorhergehenden Ansprüche, **dadurch gekennzeichnet, dass** die Lagen des Filtergestricks (12) zwischen zwei flächigen Halteeinrichtungen (16) in einer flächigen Form im Filterrahmen (12) gehalten sind, wobei als Halteeinrichtung vorzugsweise ein grobmaschiges Drahtgeflecht (16) aus rostfreiem Stahl dient, welches im Filterrahmen (12) aufgespannt ist.

9. Filteranordnung zum Abscheiden feinst verteilter Tröpfchen aus Aerosolen, insbesondere zum Abscheiden feinster Öl- und/oder Emulsionströpfchen aus Öl- und/oder Emulsionsnebeln, mit
einer Filteraufnahme (34), durch die das zu filternde Aerosol in einer vorgegebenen Strömungsrichtung (R) hindurchzuleiten ist, und
mindestens einem in die Filteraufnahme (34) gehaltenen Feinstfiltereinsatz (14) zum Filtern des durch die Filteraufnahme (34) hindurchströmenden Aerosols,
**dadurch gekennzeichnet,**
**dass** der Feinstfiltereinsatz (14) als Filter mehrere Lagen eines ausschließlich aus Kunststoffasersträngen (20) gestrickten Filtergestricks (14) hält, dessen Maschengröße so bemessen ist, dass durch die mehrlagige Anordnung feinst verteilte Tröpfchen mit einer Größe von kleiner oder gleich 1 µm aus dem Aerosol abzuscheiden sind.

10. Filteranordnung nach Anspruch 9, **dadurch gekennzeichnet, dass** der Feinstfiltereinsatz (14) bezogen auf die Strömungsrichtung (R) des zu filternden Aerolsols unter einem vorgegebenen Anstellwinkel (α) in der Filteraufnahme (34) gehalten ist.

11. Filteranordnung nach Anspruch 9 oder 10, **dadurch gekennzeichnet, dass** mindestens ein weitere Feinstfiltereinsatz (10b) in der Filteraufnahme (34) gehalten ist, der winkelsymmetrisch bezüglich des zu diesem benachbarten Feinstfiltereinsatzes (10a) derart angeordnet ist, dass die beiden Feinstfiltereinsätze (10a, 10b) in V-Form zueinander angeordnet sind und den gleichen relativen Anstellwinkel (α) bezogen auf die Strömungsrichtung (R) des zu filternden Aerosols einnehmen.

12. Filteranordnung nach Anspruch 11, **dadurch gekennzeichnet, dass** die Spitze der V-förmigen Anordnung der beiden Feinstfiltereinsätze (10a, 10b) in Strömungsrichtung (R) des zu filternden Aerosols zeigt.

13. Filteranordnung nach Anspruch 11 oder 12, **dadurch gekennzeichnet, dass** mindestens ein weiteres Paar V-förmig zueinander angeordneter Feinstfiltereinsätze (10a, 10b) in der Filteraufnahme (34) gehalten ist.

14. Filteranordnung nach einem der Ansprüche 9 bis 13, **dadurch gekennzeichnet, dass** der Feinstfiltereinsatz (10) oder die Feinstfiltereinsätze (10a, 10b) lösbar in der Filteraufnahme (34) gehalten ist bzw. sind.

15. Filteranordnung nach Anspruch 14, **dadurch gekennzeichnet, dass** für jeden Feinstfiltereinsatz (10) zwei Führungsschienen (40) an den einander gegenüber angeordneten Wänden der Filteraufnahme (34) vorgesehen sind, in welche der jeweilige Filtereinsatz (10) mit seinem Filterrahmen (12) zum lösbaren Befestigen eingeschoben ist.

16. Filteranordnung nach einem der Ansprüche 9 bis 15, **dadurch gekennzeichnet, dass** der Feinstfiltereinsatz (10) oder die Feinstfiltereinsätze (10a, 10b) nach einem der vorhergehenden Ansprüche 1 bis 8 ausgebildet ist bzw. sind.

17. Filteranordnung nach einem der Ansprüche 9 bis 16, **dadurch gekennzeichnet, dass** in der Filteraufnahme mindestens ein Grobfiltereinsatz zum Filtern gröberer Verunreinigungen aus dem zu filternden Aerosol gehalten ist.

18. Filteranordnung nach einem der Ansprüche 9 bis 17, **dadurch gekennzeichnet, dass** die Filteraufnahme (34) lösbar im Strömungskanal für das zu filternde Aerosol befestigt ist.
